# EUROPEAN PATENT SPECIFICATION

(11) **EP 4 419 781 B1**
(45) Date of publication and mention of the grant of the patent: **14.01.2026**
(21) Application number: 22790075.0
(22) Date of filing: 14.10.2022
(51) Int. Cl.: F01M 5/00, F16N 7/00, F16N 39/02, F01P 11/08, F16K 11/065, F16K 31/00, F28D 9/00, F28F 27/02, F16K 11/04, F01P 7/16, F28D 21/00, F16H 57/04

(54) **OIL TEMPERATURE MANAGEMENT ASSEMBLY**
ÖLTEMPERATURVERWALTUNGSANORDNUNG
ENSEMBLE DE GESTION DE TEMPÉRATURE D'HUILE

(30) Priority: 19.10.2021 IT 202100026786
(43) Date of publication of application: 28.08.2024
(73) Proprietor: UFI Innovation Center S.r.l., 38061 Ala (TN) (IT)
(72) Inventor: GIRONDI, Giorgio, 38061 Ala, TRENTO (IT)
(74) Representative: Gamba, Alessandro
(86) International application number: PCT/IB2022/059872
(87) International publication number: WO 2023/067451

(56) References cited:
- EP-A1- 3 467 364
- WO-A1-2017/134572
- US-A- 2 353 610
- US-A1- 2009 025 922
- US-A1- 2014 317 923
- US-A1- 2015 211 395

## Description

### Field of application

The present invention relates to an oil temperature management assembly. Preferably, the present invention relates to an oil circulation system comprising said oil temperature management assembly.

In particular, the present invention relates to the automotive field.

In fact, the oil temperature management assembly of the present invention finds specific application in a vehicle with the purpose of regulating the temperature of an operating unit of the same vehicle. In particular, an operating unit refers to a component or a group of components such as an engine unit and/or a transmission unit and/or a gearbox unit or the like.

Specifically, an oil circulation system is identified which is fluidly connected to the operating unit comprising the oil temperature management assembly adapted to manage the temperature of the oil circulating in the system.

In particular, the oil temperature management assembly comprises a heat exchanger and a fluid support and connection module. The module has a dual function: to make a fluid connection with said heat exchanger and to direct the oil towards one or the other component as a function of the temperature thereof entering the module and the pressure thereof.

### Background art

In the background art, solutions of oil temperature management assemblies that are comprised in oil circulation systems are known. Such known oil temperature management assemblies comprise a plate heat exchanger adapted to perform oil temperature regulation operations by heat exchange with a fluid. By means of such a heat exchanger, the oil is subjected to a heat exchange action with a fluid, preferably a cooling fluid, which modifies, preferably lowers, the temperature thereof.

However, the known solutions of oil temperature management assemblies have particularly complex geometries and layouts, having complex fluid geometries therein, as well as complex fluid connection modes with the ducts of the oil circulation system.

Therefore, in the solutions of the background art, greater complexity of said geometries and of said layout also entail complex management of the oil flow circulation. A complex fluid management of the oil involves an inefficient and not sudden management of the oil temperature circulating in the operating unit with consequent disadvantages to the functioning of the operating unit itself.

Furthermore, in the solutions of the background art, the greater complexity of said geometries and said layouts correspond to higher production and manufacturing costs.

In addition, in the solutions of the background art, the greater complexity of said layouts correspond to specific difficulties in positioning the oil temperature management assembly inside the vehicle: moreover, the need to optimize the occupation of available spaces is particularly felt in the automotive field. Examples of known oil temperature management assemblies having these types of drawbacks are known in documents US2353610A, WO2017134572A1, US2015211395A1, US2014317923A1, US2009025922A1 and EP3467364A1.

### Solution of the invention

Therefore, the need is strongly felt to provide an oil temperature management assembly which solves the aforesaid problems.

The object of the present invention is to provide an oil temperature management assembly which performs the oil temperature adjustment operations in an effective manner, having the simplest possible geometry and layout of the ducts.

Such an object is achieved by means of the oil temperature management assembly claimed in claim 1. The claims dependent thereon show preferred variants implying further advantageous aspects. The object is also achieved by the oil circulation system claimed in claim 14, which comprises said oil temperature management assembly.

### Description of the drawings

Further features and advantages of the invention will become apparent from the description provided below of preferred exemplary embodiments thereof, given by way of non-limiting example, with reference to the accompanying drawings, in which:
- figures 1a and 1b diagrammatically show two embodiments of an oil circulation system in accordance with the present invention;
- figures 2' and 2" show two perspective views with separate parts and semi-separate parts, respectively, of the oil temperature management assembly according to a preferred embodiment of the present invention;

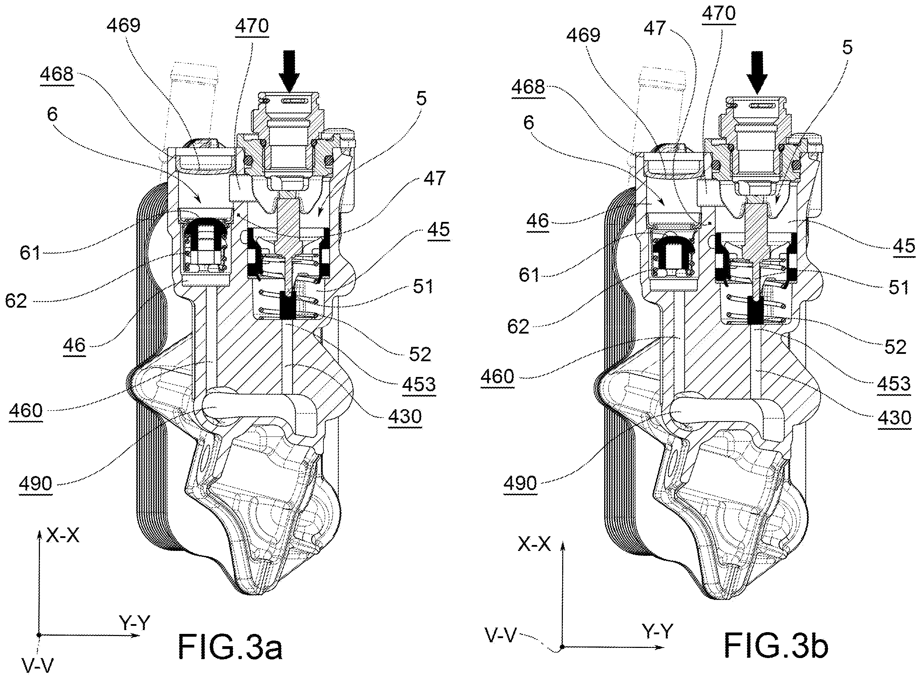

- figures 3a and 3b show two partially sectional views of the oil temperature management assembly of figures 2' and 2".

### Detailed description

With reference to the accompanying figures, reference numeral 1 indicates an oil temperature management assembly in accordance with the present invention.

In particular, the oil temperature management assembly of the present invention, as widely described below, is adapted to be part of an oil circulation system of a vehicle with the purpose of managing the oil, in particular the temperature thereof, flowing into an operating unit of a vehicle. Preferably, said "operating unit" is an engine unit, for example with internal combustion or electric or hybrid propulsion, or a transmission unit or a gearbox unit.

The object of the present invention is also said oil circulation system 900.

In accordance with a preferred embodiment, auxiliary units are also included in the oil circulation system 900, for example pump groups, or filtration devices.

According to a preferred embodiment, said auxiliary units are in turn comprised in the oil temperature management assembly 1 of the present invention.

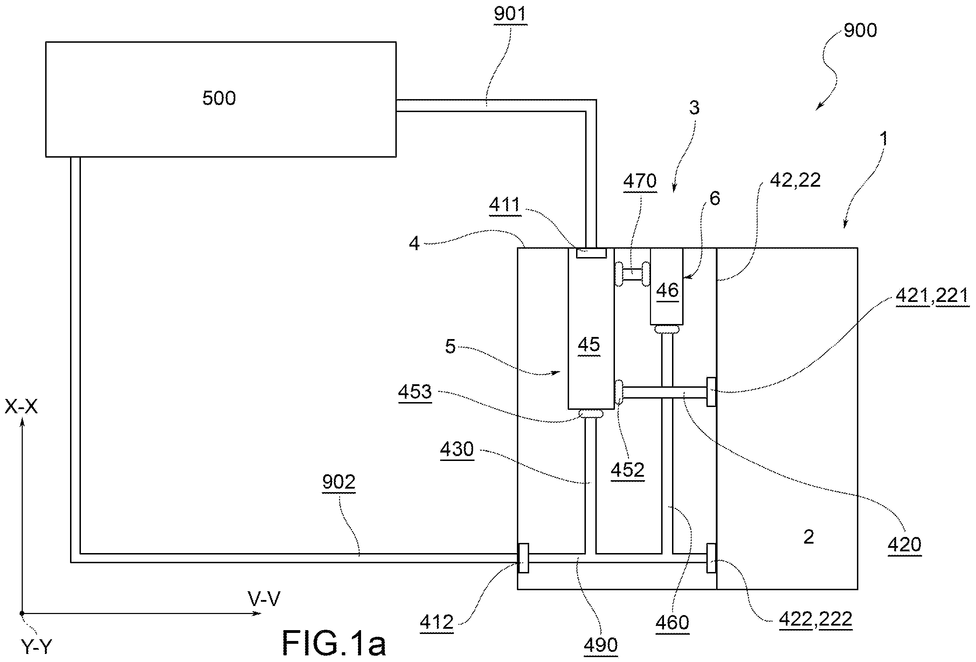

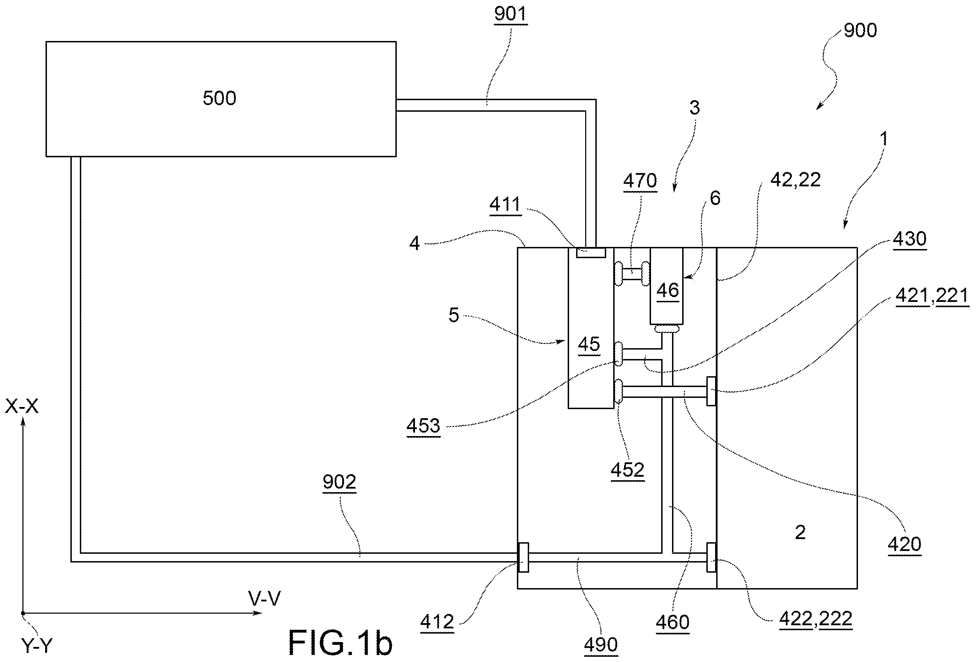

Furthermore, the oil circulation system 900 comprises ducts for connecting the respective units and/or assemblies, some of which are described below and shown by way of example also in figures 1a and 1b.

Furthermore, in accordance with a preferred embodiment, the oil temperature management assembly 1 identifies a vertical axis V-V and two longitudinal axes X-X, Y-Y. In particular, the two longitudinal axes X-X, Y-Y lie on the same imaginary plane which is orthogonal to the vertical axis V-V.

In accordance with the present invention, the oil temperature management assembly 1 comprises a heat exchanger 2.

Preferably, the heat exchanger 2 is a plate heat exchanger. In the configurations described below, oil and a second fluid, for example a water-based liquid, flow in the heat exchanger 2.

According to a preferred embodiment, the heat exchanger 2 comprises, along said vertical axis V-V, a plurality of plates mutually stacked along the vertical axis V-V to define two distinct zones, one in which the oil flows and the other in which the second fluid flows.

According to a preferred embodiment, each zone comprises vertical exchanger ducts and horizontal planar regions.

Preferably, in the heat exchanger 2 the horizontal planar regions intended for the circulation of the oil are mutually arranged in parallel.

Preferably, in the heat exchanger 2 the horizontal planar regions intended for the circulation of the second fluid are mutually arranged in parallel.

Preferably, the horizontal planar regions intended for the oil circulation are mutually alternated with the planar regions of circulation of the second fluid along the vertical axis V-V.

According to a preferred embodiment, the heat exchanger 2 extends in height parallel to the vertical axis V-V. Preferably, said plates have a longitudinal extension with respect to the longitudinal axes X-X, Y-Y.

In accordance with the present invention, the oil temperature management assembly 1 comprises a fluid support and connection module 3.

According to the present invention, the fluid support and connection module 3 comprises a module body 4 to which the heat exchanger 2 is operatively connected.

In accordance with the present invention, the module body 4 comprises:

- an assembly inlet mouth 411 which is fluidly connectable to a first oil duct 901 of the oil circulation system 900 through which the oil arriving from the operating unit 500 flows and an assembly outlet mouth 412 which is fluidly connectable to a second oil duct 902 of the oil circulation system, through which the oil flows towards the operating unit 500;

- an exchanger inlet mouth 421 and an exchanger outlet mouth 422 for the fluid connection of the heat exchanger 2 and the module 4, in which the exchanger outlet mouth 422 fluidly communicates with the assembly outlet mouth 412.

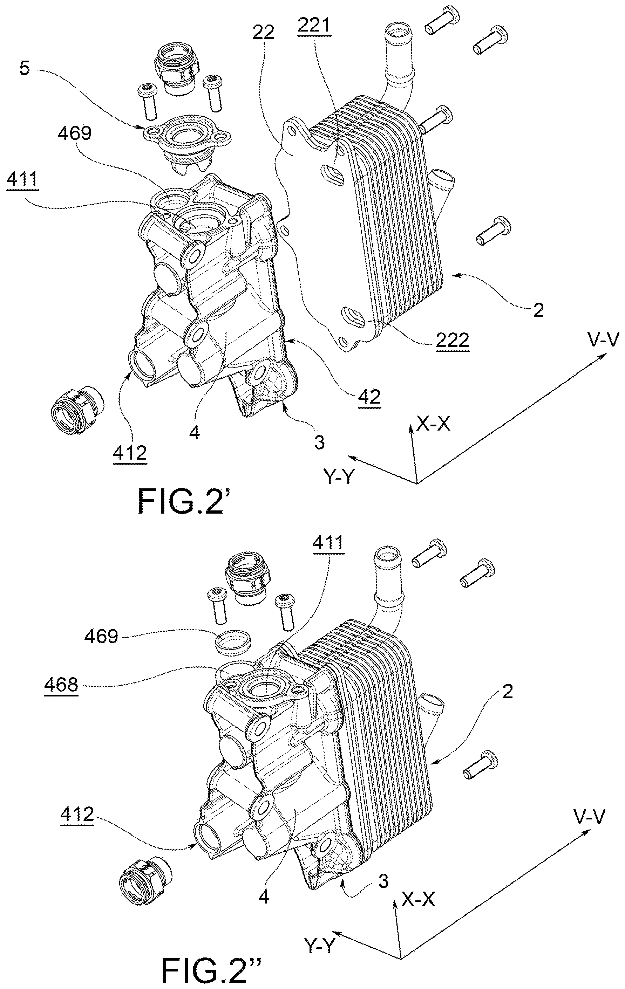

In accordance with the aforesaid preferred embodiment, the inlet and outlet mouths of the second fluid, for example water, in the heat exchanger 2 are on the heat exchanger 2 itself. As shown by way of example in the accompanying drawings, in figures 2' and 2", said inlet and outlet mouths of the second fluid are positioned on the upper plane of the heat exchanger 2.

With particular reference to what has been described above, it is emphasized that "mouths" is used to identify the fluid passages for the oil which are adapted to allow the inlet and outlet of oil from the module body 4.

In accordance with the present invention, the fluid support and connection module 3 further comprises a thermostatic valve 5 housed in the module body 4.

The thermostatic valve 5 is fluidly connected to the assembly inlet mouth 411, to the exchanger inlet mouth 421 and to the exchanger outlet mouth 412.

According to a preferred embodiment, the thermostatic valve 5 is configured to direct the flow of oil between an inlet mouth in fluid communication with the operating unit 500 and two outlet mouths in fluid communication with the heat exchanger 2 and with the outlet, for example again towards the operating unit 500, respectively.

In accordance with the present invention, the thermostatic valve 5 detects the temperature of the oil entering the module 3.

In accordance with a preferred embodiment, the thermostatic valve 5 is fluidly positioned upstream of the heat exchanger 2.

According to a preferred embodiment, the thermostatic valve 5 is positioned in a region closer to the assembly inlet mouth 411 than it is with respect to the assembly outlet mouth 412 and with respect to the exchanger inlet mouth 421.

In accordance with the present invention, the thermostatic valve 5 can be configured as a function of the oil temperature entering the module 3 in a heat exchange configuration in which it directs the oil towards the exchanger inlet mouth 421 and in a discharge configuration in which it directs the oil towards the assembly outlet mouth 412.

In accordance with the present invention, the thermostatic valve 5 can be configured with respect to a threshold temperature value in a heat exchange configuration in which it directs the oil towards the exchanger inlet mouth 421 and in a discharge configuration in which it directs the oil towards the assembly outlet mouth 412.

In other words, the thermostatic valve 5 detects the need to change the oil temperature and is arranged in one of the aforesaid configurations.

In accordance with a preferred embodiment, the entire amount of oil that reaches the thermostatic valve 5 is directed towards the heat exchanger 2.

According to a preferred embodiment, the entire amount of oil that reaches the thermostatic valve 5 is directed downstream of the heat exchanger 2.

According to a preferred embodiment, the thermostatic valve 5 can be configured in one or more intermediate configurations between the two described above in which the oil flow entering the module is reduced towards the exchanger inlet mouth 421 and the assembly outlet mouth 412.

In accordance with the present invention, the module body 4 comprises a thermostatic valve housing 45 in which the thermostatic valve 5 is housed.

According to a preferred embodiment, said thermostatic valve housing 45 extends in length from the assembly inlet mouth 411. Preferably, said thermostatic valve housing 45 extends longitudinally. Preferably, said thermostatic valve housing 45 extends parallel to a longitudinal extension direction X-X or Y-Y.

In accordance with a preferred embodiment, the thermostatic valve 5 comprises a temperature-sensitive element 51 and a shutter element 52 moved by said temperature-sensitive element 51.

Preferably, the temperature-sensitive element 51 is made in the form of a wax element or in the form of a shape memory spring.

Preferably, the shutter element 52 is moved longitudinally.

Preferably, the shutter element 52 is moved rotationally.

In accordance with a preferred embodiment, the temperature-sensitive element 51 is positioned at least partially between the assembly inlet mouth 411 and the shutter element 52.

In other words, the oil entering from the assembly inlet mouth 411 first encounters the temperature-sensitive element 51 with respect to the shutter element 52.

According to a preferred embodiment, the temperature-sensitive element 51 of the thermostatic valve 5 faces the assembly inlet mouth 411.

According to a preferred embodiment, the thermostatic valve 5 further comprises an elastic element 53 adapted to operate in the opposite direction with respect to the temperature-sensitive element 51. In other words, the temperature-sensitive element 51 must overcome the action of the elastic element 53 to modify the position of the shutter element 52.

Preferably, said elastic element 53 is made in the form of a helical spring.

Preferably, the thermostatic valve 5 is in a position normally corresponding to the heat exchange configuration.

In accordance with a preferred embodiment, the thermostatic valve housing 45 comprises a first opening 452 and a second opening 453. In the heat exchange configuration, the shutter 52 is positioned so as to open the first opening 452 and close the second opening 453, and, in the discharge configuration, the shutter 52 is positioned so as to close the first opening 452 and open the second opening 453.

In accordance with a preferred embodiment, in the heat exchange configuration, the shutter 52 is positioned so as to open the first opening 452 and close the second opening 453, and, in the discharge configuration, the shutter 52 is positioned so as to open the first opening 452 and the second opening 453.

In accordance with a preferred embodiment, the module body 4 comprises a heat exchange section 420 connecting the first opening 452 and the exchanger inlet mouth 421 and comprises a discharge section 430 connecting the second opening 453 and the assembly outlet mouth 412.

Preferably, said discharge section 430 allows the direct or indirect fluid connection of the second opening 453 with the assembly outlet mouth 412.

In accordance with a preferred embodiment, the heat exchange section 420 and/or the discharge section 430 have an extension substantially parallel to the vertical axis V-V.

In accordance with a preferred embodiment, the heat exchange section 420 and/or the discharge section 430 have a substantially transverse extension with respect to the housing of the thermostatic valve 45.

According to a preferred embodiment, the discharge section 430 extends parallel to the thermostatic valve housing 45.

Furthermore, according to a preferred embodiment, the module body 4 comprises an outlet section 490 connecting the exchanger outlet mouth 422 with the assembly outlet mouth 412.

In accordance with a preferred embodiment, said outlet section 490 extends substantially parallel to the vertical axis V-V.

In accordance with the present invention, moreover, the fluid support and connection module 3 further comprises a bypass valve 6.

Said bypass valve 6 is in fluid communication with the inlet mouth 411 and with the thermostatic valve 5.

In accordance with a preferred embodiment, the bypass valve 6 operates in parallel with the thermostatic valve 5. In other words, the thermostatic valve 5 and the bypass valve 6 are arranged in parallel with respect to the circulation direction of the oil entering the module 3.

In particular, the thermostatic valve 5 and the bypass valve 6 are in fluid communication with the same oil supply mouth, i.e., the assembly inlet mouth 411, and are configured to direct the flow of oil towards respective oil circulation mouths and/or ducts according to the temperature and pressure of the oil entering the module 3.

According to a preferred embodiment, the bypass valve 6 is fluidly connected to the assembly outlet mouth 421.

In accordance with a preferred embodiment, the bypass valve 6 is normally in a closed configuration in which the oil flows entirely towards the thermostatic valve 5. Furthermore, the bypass valve 6 can be configured in a bypass configuration, when an oil flow having a pressure higher than a threshold pressure value flows, in which the oil flows directly towards the assembly outlet mouth 412.

In accordance with a preferred embodiment, in the bypass configuration the bypass valve 6 puts the assembly inlet mouth 411 in fluid communication with the assembly outlet mouth 412, directing the flow of oil directly towards the operating unit 500 allowing the oil flow to avoid circulation through the heat exchanger 2 when certain pressure conditions persist.

According to a preferred embodiment, the bypass valve 6 avoids the occurrence of an operating condition in which high pressure oil flows into the heat exchanger 2.

In accordance with a preferred embodiment, the bypass valve 6 comprises a closure element 61 and an elastically yielding element 62.

Preferably, in the bypass configuration the action of the pressure exerted by the oil flow on the closure element 61 overcomes the force of the elastically yielding element 62 by changing the position of the closure element 61.

According to a preferred embodiment, the module body 4 comprises a bypass section 460 connecting the bypass valve 6 to the assembly outlet mouth 412, preferably to the outlet section 490.

According to a preferred embodiment, the bypass section 460 extends substantially in a longitudinal direction.

In accordance with the present invention, the module body 4 comprises a bypass valve housing 46 for housing the bypass valve 6.

In accordance with a preferred embodiment, the bypass section 460 is in fluid communication with said bypass valve housing 46.

According to the invention, the thermostatic valve housing 45 and the bypass valve housing 46 are in fluid communication by means of a connection passageway 470.

Preferably, said connection passageway 470 is positioned to be proximal to the assembly inlet mouth 411 with respect to the thermostatic valve 5.

According to a preferred embodiment, the thermostatic valve housing 45 and the bypass valve housing 46 are in fluid communication by means of a connection passageway 470, preferably positioned to be proximal to the assembly inlet mouth 411 with respect to the shutter element 52 of the thermostatic valve 5.

According to the present invention, the thermostatic valve housing 45 and the bypass valve housing 46 extend parallel to each other.

Preferably, the thermostatic valve housing 45 and the bypass valve housing 46 extend along respective axes oriented substantially parallel.

In accordance with a preferred embodiment, the thermostatic valve housing 45 and the bypass valve housing 46 are mutually separated by a partition wall 47 comprised in the module body 4, in which said connection passageway 470 is obtained in said partition wall 47.

According to a preferred embodiment, said connection passageway 470 is identified by the presence of a recess or a lowering of the partition wall 47 adapted to allow the fluid connection between the thermostatic valve 5 and the bypass valve 6 or between the respective thermostatic valve housing 45 and bypass valve housing 46.

In other words, according to a preferred embodiment the partition wall 47 extends in height dividing the thermostatic valve housing 45 and the bypass valve housing 46 up to a region near the assembly inlet mouth 411 in which the connection passageway 470 is positioned.

In accordance with a preferred embodiment, the assembly inlet mouth 411 supplies oil to both the thermostatic valve housing 45 and the bypass valve housing 46, in which the thermostatic valve 5 and the bypass valve 6 operate in accordance with what is described above.

Preferably, the thermostatic valve housing 45 and the bypass valve housing 46 are filled with the circulating oil according to the principle of vessels communicating through the connection passageway 470.

In accordance with a preferred embodiment, while the thermostatic valve 5 manages the oil circulation as a function of the temperature, an oil pressure peak detected by the bypass valve 6 allows the management of any overpressure.

In addition, according to a preferred embodiment, the module body 4 comprises a valve insertion hole 468 inside which the bypass valve 6 can be inserted. Preferably, the module body 4 comprises a closure plug 469 adapted to close said insertion hole 460.

According to a preferred embodiment, the module body 4 comprises an insertion hole for the thermostatic valve 5 and an insertion hole for the bypass valve 6. Preferably, the module body 4 comprises a closure plug adapted to close both of the insertion holes described above.

According to a preferred embodiment, the module body 4 comprises a planar module face 42. Preferably, the exchanger inlet mouth 421 and the exchanger outlet mouth 422 lie on said planar module face 42.

Preferably, the same heat exchanger 2 comprises a planar exchanger face 22 on which an inlet opening 221 and an outlet opening 222 lie, facing the exchanger inlet mouth 421 and the exchanger outlet mouth 422, respectively. Preferably, the vertical ducts of the zone into which the oil flows extend vertically from said inlet opening 221 and from said outlet opening 222.

In accordance with a preferred embodiment, the module body 4 comprises respective gaskets surrounding the exchanger inlet mouth 421 and the exchanger outlet mouth 422 to allow the fluid coupling of the heat exchanger 2 to the module body 4.

According to a preferred embodiment, the module body 4 is a monolithic body made of aluminum alloy by casting or die casting.

According to a preferred embodiment, the module body 4 is a monolithic body made of plastic material by an injection molding process.

In accordance with a preferred embodiment, the base plate of the heat exchanger 2 has special slots which can be crossed by screws for fastening the heat exchanger 2 to the module body 4.

According to a preferred embodiment, the heat exchanger 2 and the module body 4 can be fixed by brazing.

Preferably, in the tables shown by way of example, the module body 4 comprises specific fittings positioned at the assembly inlet mouth 411, the assembly outlet mouth 412 to facilitate the engagement with the first oil duct 901 and the second oil duct 902.

Innovatively, the oil temperature management assembly amply fulfills the object of the present invention by overcoming the typical problems of the known art.

Advantageously, in fact, the oil temperature management assembly has a particularly simple layout in the "fluid part" thereof and in the fluid connections thereof with the respective operating unit.

Advantageously, the oil temperature management assembly is adapted to detect the entering oil temperature in a precise and timely manner by performing a timely management of the oil towards the heat exchanger downstream of said heat exchanger, for example, towards the operating unit or a filtration device.

Advantageously, the oil temperature management assembly has optimized fluid paths inside the module body, resulting extremely efficient in reducing the pressure drops imposed on the oil circulation system and associated with the operation of the oil temperature management assembly.

Advantageously, the positioning of the thermostatic valve upstream of the heat exchanger allows to reduce the number of circulation mouths and ducts inside the module body, simplifying its structure, production process and costs associated with the manufacture thereof.

Advantageously, the positioning of the thermostatic valve upstream of the heat exchanger allows to bypass the heat exchanger, avoiding the oil circulation through the inner channels thereof, thereby reducing the pressure drops imposed on the oil circulation system associated with the operation of the oil temperature management assembly.

Advantageously, the presence of the bypass valve and the positioning of the bypass valve allow to fluidly bypass the heat exchanger, preserving it from unwanted overpressures.

Advantageously, the presence and positioning of the bypass valve allows to bypass the thermostatic valve and the heat exchanger, ensuring a rapid response to pressure and temperature changes, managing the circulation of the oil to and from the operating unit in an extremely optimized manner.

Advantageously, the mutual positioning of the thermostatic valve and of the bypass valve allow an extremely functional and effective mutual operation.

Advantageously, the thermostatic valve and the bypass valve communicate with the same oil supply opening resulting extremely reactive and ready in detecting and managing the oil circulation as a function of both the temperature and pressure thereof.

Advantageously, the mutual positioning of the thermostatic valve and the bypass valve allows the creation of an oil management assembly capable of controlling the oil circulation both as a function of temperature and as a function of pressure using two valves installed in respective housings, in which each valve has a simple and cost-effective structure.

Advantageously, the use of control valves with a simple structure, installed in respective housings in fluid communication allows to increase the reliability of the temperature management assembly, minimizing the risks of possible malfunctions of the operating unit and the circulation system.

Advantageously, the presence of a thermostatic valve housing in communication with a bypass valve housing allows to integrate both the temperature control and the pressure control on the management assembly avoiding the use of multifunction valves which can be installed in a single housing and characterized by a complex structure and high production costs.

Advantageously, the oil temperature management assembly ensures a high maximization of the exploitation of the spaces in the vehicle. Advantageously, the oil temperature management assembly is particularly flexible in the application thereof, for example allowing the designer to fully exploit the free spaces in the vehicle.

It is apparent that, in order to meet contingent needs, those skilled in the art may make changes to the above-described oil temperature management assembly, all contained within the scope of protection as defined by the following claims.

### Reference numeral list:

1 oil temperature management assembly
2 heat exchanger
22 planar exchanger face
221 inlet opening
222 outlet opening
3 fluid support and connection module
4 module body
411 assembly inlet mouth
412 assembly outlet mouth
42 planar module face
420 heat exchange section
421 exchanger inlet mouth
422 exchanger outlet mouth
430 discharge section
45 thermostatic valve housing
452 first opening
453 second opening
46 bypass valve housing
460 bypass section
468 valve insertion hole
469 closure plug
47 partition wall
470 connection passageway
5 thermostatic valve
51 temperature-sensitive element
52 shutter element
53 elastic element
6 bypass valve
61 closing element
62 elastically yielding element
500 operating unit
900 oil circulation system
901 first oil duct
902 second oil duct
X-X, Y-Y longitudinal axes
V-V vertical axis

## Claims

1. An oil temperature management assembly (1) fluidically connectable to an oil circulation system (900) of an operating group of a vehicle (500), for example an engine group or a transmission group or a gearbox group, wherein the oil temperature management assembly (1) comprises a heat exchanger (2) and a fluidic support and connection module (3) comprising:
i) a module body (4), to which the heat exchanger (2) is operatively connected, comprising:
- an assembly inlet mouth (411) fluidically connectable to a first oil duct (901) of the oil circulation system (900) through which the oil arriving from the operating group (500) flows and an assembly outlet mouth (412) fluidically connectable to a second oil duct (902) of the oil circulation system through which the oil flows towards the operating group (500);
- a exchanger inlet mouth (421) and a exchanger outlet mouth (422) for the fluidic connection of the heat exchanger (2) and the module (3), wherein the exchanger outlet mouth (422) fluidically communicates with the assembly outlet mouth (412);
ii) a thermostatic valve (5) housed in the module body (4), in a thermostatic valve housing (45), fluidically connected to the assembly inlet mouth (411), the exchanger inlet mouth (421) and the assembly outlet mouth (412), wherein the thermostatic valve (5) detects the temperature of the oil entering the module (3) and is configurable with respect to a threshold temperature value in a thermal exchange configuration in which it directs the oil towards the exchanger inlet mouth (421) and in a discharge configuration in which it directs the oil towards the assembly outlet mouth (412);
iii) a bypass valve (6), housed in the module body (4), in a bypass valve housing (46), in fluidic communication with the assembly inlet mouth (411) and the thermostatic valve (5), wherein the bypass valve (6) is fluidically connected to the assembly outlet mouth (412), wherein the bypass valve (6) is normally in a closed configuration in which the oil flows entirely towards the thermostatic valve (5) and is configurable in a bypass configuration, when an oil flow having a pressure greater than a threshold pressure value flows, in which the oil flows directly towards the assembly outlet mouth (412);
wherein the oil temperature management assembly (1) is **characterized in that** the thermostatic valve housing (45) and the bypass valve housing (46) extend parallel to each other, wherein the thermostatic valve housing (45) and the bypass valve housing (46) are in fluidic communication by means of a connection passageway (470).

2. Oil temperature management assembly (1) according to claim 1, wherein the thermostatic valve (5) and the bypass valve (6) operate as a function of the oil temperature and pressure at the inlet of the module (3), respectively.

3. Oil temperature management assembly (1) according to any one of the preceding claims, wherein the connection passageway (470) is positioned proximal to the assembly inlet mouth (411) with respect to the thermostatic valve (5).

4. Oil temperature management assembly (1) according to any one of the preceding claims, wherein the thermostatic valve (5) comprises a temperature-sensitive element (51) and a shutter element (52) moved by said temperature-sensitive element (51), wherein the temperature-sensitive element (51) is positioned at least partially between the assembly inlet mouth (411) and the shutter element (52).

5. Oil temperature management assembly (1) according to claims 3 and 4, wherein the thermostatic valve housing (45) comprises a first opening (452) and a second opening (453), wherein in the thermal exchange configuration the shutter (52) is positioned so as to open the first opening (452) and close the second opening (453), and wherein in the auxiliary configuration the shutter (52) is positioned so as to close the first opening (452) and open the second opening (453), wherein the connection passageway (470) is positioned closer to the assembly inlet mouth (411) with respect to both the first opening (452) and the second opening (453).

6. Oil temperature management assembly (1) according to any one of the preceding claims, wherein the module body (4) comprises a partition wall (47) separating the thermostatic valve housing (45) and the bypass valve housing (46), wherein the connection passageway (470) is obtained in said partition wall (47).

7. Oil temperature management assembly (1) according to any one of the preceding claims, wherein the module body (4) comprises a valve insertion hole (468) in which the bypass valve (6) is insertable, comprising a closure plug (469) suitable for closing said insertion hole (460).

8. Oil temperature management assembly (1) according to any one of the preceding claims, comprising a vertical axis (V-V) and two longitudinal axes (X-X; Y-Y) lying mutually orthogonal to one another, wherein the heat exchanger (2) extends vertically parallel to said vertical axis (V-V), wherein the thermostatic valve (5) extends substantially parallel to a longitudinal axis (X-X; Y-Y).

9. Oil temperature management assembly (1) according to claim 8 in combination with claim 5, wherein the module body (4) comprises a thermal exchange section (420) connecting the first opening (452) and the exchanger inlet mouth (421) and comprises a discharge section (430) connecting the second opening (453) towards the assembly outlet mouth (412), wherein preferably both the thermal exchange section (420) and the discharge section (430) extend substantially parallel to the vertical axis (V-V).

10. Oil temperature management assembly (1) according to claim 8 or claim 9, wherein the module body (4) comprises an outlet section (490) connecting the exchanger outlet mouth (422) to the assembly outlet mouth (412).

11. Oil temperature management assembly (1) according to any one of the preceding claims, wherein the module body (4) comprises a bypass section (460) connecting the bypass valve (6) to the assembly outlet mouth (412), preferably to the outlet section (490), wherein the bypass section (460) mainly extends in a substantially longitudinal direction.

12. Oil temperature management assembly (1) according to any one of claims 9 to 11, wherein the discharge section (430) indirectly communicates with the assembly outlet mouth (412) being in fluidic communication with the outlet section (490) or the bypass section (460).

13. Oil temperature management assembly (1) according to any one of the preceding claims, wherein the module body (4) comprises a planar module face (42) on which the exchanger inlet mouth (421) and the exchanger outlet mouth (422) are obtained, wherein the heat exchanger (2) is preferably sealingly fixed to said planar module face (42) .

14. Oil circulation system (900) of an operating group of a vehicle (500), for example an engine group or a transmission group or a gearbox group, comprising a temperature management assembly (1) according to any one of the preceding claims.

## Patentansprüche

1. Öltemperaturverwaltungsanordnung (1), die in Fluidverbindung mit einem Ölkreislaufsystem (900) einer Betriebsgruppe eines Fahrzeugs (500) gebracht werden kann, beispielsweise einer Motorgruppe oder einer Antriebsgruppe oder einer Getriebegruppe, wobei die Öltemperaturverwaltungsanordnung (1) einen Wärmetauscher (2) und ein fluidisches Träger- und Verbindungsmodul (3) umfasst, umfassend:
i) einen Modulkörper (4), mit dem der Wärmetauscher (2) operativ verbunden ist, umfassend:
- eine Anordnung-Einlassmündung (411), die in Fluidverbindung mit einer ersten Ölleitung (901) des Ölkreislaufsystems (900) gebracht werden kann, durch die das Öl, das aus der Betriebsgruppe (500) kommt, strömt, und einen Anordnung-Auslassmündung (412), die in Fluidverbindung mit einer zweiten Ölleitung (902) des Ölkreislaufsystems gebracht werden kann, durch die das Öl zu der Betriebsgruppe (500) strömt;
- einen Austauscher-Einlassmündung (421) und einen Austauscher-Auslassmündung (422) für die Fluidverbindung des Wärmetauschers (2) mit dem Modul (3), wobei der Austauscher-Auslassmündung (422) in Fluidkommunikation mit der Anordnung-Auslassmündung (412) steht;
ii) ein Thermostatventil (5), das in dem Modulkörper (4) in einem Thermostatventilgehäuse (45) aufgenommen wird, das in Fluidverbindung mit der Anordnung-Einlassmündung (411), der Austauscher-Einlassmündung (421) und der Anordnung-Auslassmündung (412) steht, wobei das Thermostatventil (5) die Temperatur des Öls, das in das Modul (3) eintritt, erfasst und in Bezug auf einen Temperaturschwellenwert konfigurierbar ist, in einer Wärmeaustauschkonfiguration, in der es das Öl zu der Austauscher-Einlassmündung (421) leitet, und in einer Entlastungskonfiguration, in der es das Öl zu der Anordnung- Auslassmündung (412) leitet;
iii) ein Bypassventil (6), das in dem Modulkörper (4) in einem Bypassventilgehäuse (46) aufgenommen wird, das in Fluidkommunikation mit der Anordnung-Einlassmündung (411) und dem Thermostatventil (5) steht, wobei das Bypassventil (6) in Fluidverbindung mit der Anordnung-Auslassmündung (412) steht, wobei das Bypassventil (6) sich normalerweise in einer geschlossenen Konfiguration befindet, in der das Öl vollständig zu dem Thermostatventil (5) strömt, und in einer Bypasskonfiguration konfigurierbar ist, wenn ein Ölstrom aufweisend einen Druck, der höher als ein Druckschwellenwerte ist, strömt, in der das Öl direkt zu der Anordnung- Auslassmündung (412) strömt;
wobei die Öltemperaturverwaltungsanordnung (1) **dadurch gekennzeichnet ist, dass** sich das Thermostatventilgehäuse (45) und das Bypassventilgehäuse (46) parallel zueinander erstrecken, wobei das Thermostatventilgehäuse (45) und das Bypassventilgehäuse (46) mittels eines Verbindungsdurchgangs (470) in Fluidkommunikation miteinander stehen.

2. Öltemperaturverwaltungsanordnung (1) nach Anspruch 1, wobei das Thermostatventil (5) und das Bypassventil (6) jeweils in Abhängigkeit von der Temperatur und dem Druck des Öls an dem Einlass des Moduls (3) arbeiten.

3. Öltemperaturverwaltungsanordnung (1) nach einem der vorhergehenden Ansprüche, wobei der Verbindungsdurchgang (470) proximal der Anordnung-Einlassmündung (411) in Bezug auf das Thermostatventil (5) positioniert ist.

4. Öltemperaturverwaltungsanordnung (1) nach einem der vorhergehenden Ansprüche, wobei das Thermostatventil (5) ein temperaturempfindliches Element (51) und ein Verschlusselement (52), das von diesem temperaturempfindlichen Element (51) bewegt wird, umfasst, wobei das temperaturempfindliche Element (51) mindestens teilweise zwischen der Anordnung-Einlassmündung (411) und dem Verschlusselement (52) positioniert ist.

5. Öltemperaturverwaltungsanordnung (1) nach den Ansprüchen 3 und 4, wobei das Thermostatventilgehäuse (45) eine erste Öffnung (452) und eine zweite Öffnung (453) umfasst, wobei das Verschlusselement (52) in der Wärmeaustauschkonfiguration positioniert ist, um die erste Öffnung (452) zu öffnen und die zweite Öffnung (453) zu verschließen, und wobei das Verschlusselement (52) in der Hilfskonfiguration positioniert ist, um die erste Öffnung (452) zu verschließen und die zweite Öffnung (453) zu öffnen, wobei der Verbindungsdurchgang (470) mehr in der Nähe der Anordnung-Einlassmündung (411) in Bezug auf sowohl die erste Öffnung (452) als auch die zweite Öffnung (453) positioniert ist.

6. Öltemperaturverwaltungsanordnung (1) nach einem der vorhergehenden Ansprüche, wobei der Modulkörper (4) eine Trennwand (47) umfasst, die das Thermostatventilgehäuse (45) und das Bypassventilgehäuse (46) trennt, wobei der Verbindungsdurchgang (470) in dieser Trennwand (47) erhalten wird.

7. Öltemperaturverwaltungsanordnung (1) nach einem der vorhergehenden Ansprüche, wobei der Modulkörper (4) eine Ventileinführungsbohrung (468) umfasst, in die das Bypassventil (6) einführbar ist, und einen Verschlussstopfen (469) umfasst, der geeignet ist, die Einführungsbohrung (460) zu verschließen.

8. Öltemperaturverwaltungsanordnung (1) nach einem der vorhergehenden Ansprüche, umfassend eine Vertikalachse (V-V) und zwei Längsachsen (X-X; Y-Y), die sich orthogonal zueinander befinden, wobei sich der Wärmetauscher (2) vertikal parallel zu der Vertikalachse (V-V) erstreckt, wobei sich das Thermostatventil (5) im Wesentlichen parallel zu einer Längsachse (X-X; Y-Y) erstreckt.

9. Öltemperaturverwaltungsanordnung (1) nach Anspruch 8 in Kombination mit Anspruch 5, wobei der Modulkörper (4) einen Wärmeaustauschabschnitt (420) umfasst, der die erste Öffnung (452) mit der Austauscher-Einlassmündung (421) verbindet, und einen Entlastungsabschnitt (430) umfasst, der die zweite Öffnung (453) mit der Anordnung-Auslassmündung (412) verbindet, wobei sich vorzugsweise sowohl der Wärmeaustauschabschnitt (420) als auch der Entlastungsabschnitt (430) im Wesentlichen parallel zur Vertikalachse (V-V) erstrecken.

10. Öltemperaturverwaltungsanordnung (1) nach Anspruch 8 oder Anspruch 9, wobei der Modulkörper (4) einen Auslassabschnitt (490) umfasst, der die Austauscher-Auslassmündung (422) mit der Anordnung-Auslassmündung (412) verbindet.

11. Öltemperaturverwaltungsanordnung (1) nach einem der vorhergehenden Ansprüche, wobei der Modulkörper (4) einen Bypassabschnitt (460) umfasst, der das Bypassventil (6) mit der Anordnung-Auslassmündung (412), vorzugsweise mit dem Auslassabschnitt (490), verbindet, wobei sich der Bypassabschnitt (460) hauptsächlich in einer in Wesentlichen Längsrichtung erstreckt.

12. Öltemperaturverwaltungsanordnung (1) nach einem der Ansprüche 9 bis 11, wobei der Entlastungsabschnitt (430) indirekt mit der Anordnung-Auslassmündung (412) kommuniziert, indem er in Fluidkommunikation mit dem Auslassabschnitt (490) oder dem Bypassabschnitt (460) steht.

13. Öltemperaturverwaltungsanordnung (1) nach einem der vorhergehenden Ansprüche, wobei der Modulkörper (4) eine ebene Modulfläche (42) aufweist, auf der die Austauscher-Einlassmündung (421) und der Austauscher-Auslassmündung (422) erhalten werden, wobei der Wärmetauscher (2) vorzugsweise dichtend an der ebenen Modulfläche (42) befestigt wird.

14. Ölkreislaufsystem (900) einer Betriebsgruppe eines Fahrzeugs (500), beispielsweise einer Motorgruppe oder einer Antriebsgruppe oder einer Getriebegruppe, umfassend eine Öltemperaturverwaltungsanordnung (1) nach einem der vorhergehenden Ansprüche.

## Revendications

1. Un ensemble de gestion de température d'huile (1) pouvant être raccordé fluidiquement à un circuit de circulation d'huile (900) d'un groupe fonctionnel d'un véhicule (500), par exemple un groupe moteur ou un groupe de transmission ou un groupe de boîte de vitesses, dans lequel l'ensemble de gestion de température d'huile (1) comprend un échangeur de chaleur (2) et un module de support et de raccordement fluidique (3) comprenant :
i) un corps de module (4), auquel l'échangeur de chaleur (2) est connecté de manière fonctionnelle, comprenant :
- une bouche d'entrée de l'ensemble (411) pouvant être raccordée fluidiquement à un premier conduit d'huile (901) du circuit de circulation d'huile (900) à travers lequel l'huile en provenance du groupe fonctionnel (500) circule, et une bouche de sortie de l'ensemble (412) pouvant être raccordée fluidiquement à un second conduit d'huile (902) du circuit de circulation à travers lequel l'huile circule en direction du groupe fonctionnel (500) ;
- une bouche d'entrée de l'échangeur (421) et une bouche de sortie de l'échangeur (422) pour le raccordement fluidique de l'échangeur de chaleur (2) et du module (3), la bouche de sortie de l'échangeur (422) communiquant fluidiquement avec la bouche de sortie de l'ensemble (412) ;
ii) une vanne thermostatique (5) logée dans le corps de module (4), dans un logement de vanne thermostatique (45), raccordé fluidiquement à la bouche d'entrée de l'ensemble (411), à la bouche d'entrée de l'échangeur (421) et à la bouche de sortie de l'ensemble (412), la vanne thermostatique (5) détectant la température de l'huile entrant dans le module (3) et étant configurable en fonction d'une valeur de température seuil dans une configuration d'échange thermique dans laquelle elle dirige l'huile vers la bouche d'entrée de l'échangeur (421) et dans une configuration de décharge dans laquelle elle dirige l'huile vers la bouche de sortie de l'ensemble (412) ;
iii) une vanne de dérivation (6), logée dans le corps de module (4), dans un logement de vanne de dérivation (46), en communication fluidique avec la bouche d'entrée de l'ensemble (411) et la vanne thermostatique (5), la vanne de dérivation (6) étant raccordée fluidiquement à la bouche de sortie de l'ensemble (412), la vanne de dérivation (6) étant normalement dans une configuration fermée dans laquelle l'huile circule entièrement vers la vanne thermostatique (5) et étant configurable dans une configuration de dérivation, lorsqu'un flux d'huile ayant une pression supérieure à une valeur de pression seuil circule, dans laquelle l'huile circule directement vers la bouche de sortie de l'ensemble (412) ;
dans lequel l'ensemble de gestion de température d'huile (1) est **caractérisé en ce que** le logement de vanne thermostatique (45) et le logement de vanne de dérivation (46) s'étendent parallèlement l'un à l'autre, le logement de vanne thermostatique (45) et le logement de vanne de dérivation (46) étant en communication fluidique au moyen d'un passage de connexion (470).

2. Ensemble de gestion de température d'huile (1) selon la revendication 1, dans lequel la vanne thermostatique (5) et la vanne de dérivation (6) fonctionnent en fonction de la température et de la pression de l'huile à l'entrée du module (3), respectivement.

3. Ensemble de gestion de température d'huile (1) selon l'une quelconque des revendications précédentes, dans lequel le passage de connexion (470) est positionné à proximité de la bouche d'entrée de l'ensemble (411) par rapport à la vanne thermostatique (5).

4. Ensemble de gestion de température d'huile (1) selon l'une quelconque des revendications précédentes, dans lequel la vanne thermostatique (5) comprend un élément sensible à la température (51) et un élément d'obturation (52) déplacé par ledit élément sensible à la température (51), l'élément sensible à la température (51) étant positionné au moins partiellement entre la bouche d'entrée de l'ensemble (411) et l'élément d'obturation (52).

5. Ensemble de gestion de température d'huile (1) selon les revendications 3 et 4, dans lequel le logement de la vanne thermostatique (45) comprend une première ouverture (452) et une seconde ouverture (453), dans lequel dans la configuration d'échange thermique l'obturateur (52) est positionné de manière à ouvrir la première ouverture (452) et à fermer la seconde ouverture (453), et dans lequel dans la configuration auxiliaire l'obturateur (52) est positionné de manière à fermer la première ouverture (452) et à ouvrir la seconde ouverture (453), le passage de connexion (470) étant positionné plus près de la bouche d'entrée de l'ensemble (411) par rapport à la première ouverture (452) et à la seconde ouverture (453).

6. Ensemble de gestion de température d'huile (1) selon l'une quelconque des revendications précédentes, dans lequel le corps de module (4) comprend une paroi de séparation (47) séparant le logement de la vanne thermostatique (45) et le logement de la vanne de dérivation (46), le passage de connexion (470) étant obtenu dans ladite paroi de séparation (47).

7. Ensemble de gestion de température d'huile (1) selon l'une quelconque des revendications précédentes, dans lequel le corps de module (4) comprend un orifice d'insertion de vanne (468) dans lequel la vanne de dérivation (6) est insérable, comprenant un bouchon de fermeture (469) adapté pour fermer ledit orifice d'insertion (460).

8. Ensemble de gestion de température d'huile (1) selon l'une quelconque des revendications précédentes, comprenant un axe vertical (V-V) et deux axes longitudinaux (X-X ; Y-Y) s'étendant orthogonalement l'un par rapport à l'autre, dans lequel l'échangeur de chaleur (2) s'étend verticalement parallèlement audit axe vertical (V-V), dans lequel la vanne thermostatique (5) s'étend sensiblement parallèlement à un axe longitudinal (X-X ; Y-Y).

9. Ensemble de gestion de température d'huile (1) selon la revendication 8 en combinaison avec la revendication 5, dans lequel le corps de module (4) comprend une section d'échange thermique (420) reliant la première ouverture (452) et la bouche d'entrée de l'échangeur (421) et comprend une section de décharge (430) reliant la seconde ouverture (453) à la bouche de sortie de l'ensemble (412), dans lequel de préférence la section d'échange thermique (420) et la section de décharge (430) s'étendent sensiblement parallèlement à l'axe vertical (V-V).

10. Ensemble de gestion de température d'huile (1) selon la revendication 8 ou la revendication 9, dans lequel le corps de module (4) comprend une section de sortie (490) reliant la bouche de sortie de l'échangeur (422) à la bouche de sortie de l'ensemble (412).

11. Ensemble de gestion de température d'huile (1) selon l'une quelconque des revendications précédentes, dans lequel le corps de module (4) comprend une section de dérivation (460) reliant la vanne de dérivation (6) à la bouche de sortie de l'ensemble (412), de préférence à la section de sortie (490), la section de dérivation (460) s'étendant principalement dans une direction sensiblement longitudinale.

12. Ensemble de gestion de température d'huile (1) selon l'une quelconque des revendications 9 à 11, dans lequel la section de décharge (430) communique indirectement avec la bouche de sortie de l'ensemble (412) étant en communication fluidique avec la section de sortie (490) ou la section de dérivation (460).

13. Ensemble de gestion de température d'huile (1) selon l'une quelconque des revendications précédentes, dans lequel le corps de module (4) comprend une face plane de module (42) sur laquelle sont obtenues la bouche d'entrée de l'échangeur (421) et la bouche de sortie de l'échangeur (422), l'échangeur de chaleur (2) étant de préférence fixé de manière étanche à ladite face plane de module (42).

14. Système de circulation d'huile (900) d'un groupe fonctionnel d'un véhicule (500), par exemple un groupe moteur ou un groupe de transmission ou un groupe de boîte de vitesses, comprenant un ensemble de gestion de température (1) selon l'une quelconque des revendications précédentes.
